Europäisches Patentamt

European Patent Office

Office européen des brevets

(19)

(11) Publication number: **0 384 994**

**A1**

(12) # EUROPEAN PATENT APPLICATION

(21) Application number: **89202802.8**

(22) Date of filing: **07.11.89**

(51) Int. Cl.⁵: **B66F 7/24, B60B 30/04, B60T 3/00**

(30) Priority: **02.03.89 SE 8900723**

(43) Date of publication of application:
**05.09.90 Bulletin 90/36**

(84) Designated Contracting States:
**DE ES FR GB IT**

(71) Applicant: **CAR-O-LINER AB**
**Box 7**
**S-73600 Kungsör(SE)**

(72) Inventor: **Eltvik, Björn**
**Lövstavägen 18**
**S-732 00 Arboga(SE)**

(74) Representative: **Nydell, Peder**
**Nydells Patentbyra Fridhemsgatan 13**
**S-392 37 Kalmar(SE)**

(54) **Dolly for heavy objects.**

(57) A dolly for facilitating the moving of heavy objects. The dolly includes a chassis (1-4) for supporting the object (24) and having roller means (13-20) enabling the chassis to be rolled on the ground or the floor (23). The top side of the chassis has plane abutment surfaces (1d, 2d, 3d) which are located above the roller means (13-20) and permitting the dolly to be turned upside down and to rest with the abutment surfaces against the ground (23). The chassis has a through hole (6), the size of which is adjustable, and in which the object may rest when the dolly is placed with its roller means on the ground, and, as well, when the dolly is turned upside down and rests with the abutment surfaces against the ground, the dolly in its upside down position thereby being capable of serving as a chock for the object. The hole (6) is open also towards one side to permit the dolly, in its upside down position, to be slid into place under the object (24), also if this rests on the ground.

FIG. 2

TECHNICAL FIELD

The present invention relates to a dolly adapted to facilitate the moving of heavy objects, the dolly including a chassis structure for supporting the object, the chassis structure having roller means enabling the chassis structure to be rolled on a ground or the like while supporting the object.

The dolly according to the invention is particularly, but nut exclusively, adapted to facilitate the moving of objects such as wheels of a vehicle, drums or other cylindrical objects which have a substantially ring-shaped abutment surface.

BACKGROUND PRIOR ART

Prior art dollies of the aforesaid kind are used, for example, for moving damaged vehicles, having one or more incapacitated wheels. (See for instance US-A-3,583,723.) In use, the dolly is placed under the wheel, with the ring-shaped abutment surface, i.e. with the tire ring (or with its ring-shaped rim edge if the tire has been removed), into contact with the dolly. Thus, the dolly replaces the rolling function of the incapacitated wheel. Thereby, the vehicle can be moved by rolling in spite of the fact that the wheel of the vehicle is incapacitated.

Whereas such dollies facilitate the moving of the vehicle, it is sometimes desirable to prevent any moving of the vehicle. This has hitherto been done by placing a chock under at least one of the wheels. (See for instance US-A-3,811,536.)

DISCLOSURE OF THE INVENTION

The object of the present invention is to provide a dolly of the aforementioned kind which has the capacity of the known dolly to facilitate the moving of the object, and also the capacity of the known chock to prevent any moving of the object. This object is achieved with a dolly constructed in accordance with the invention and having the characteristic features set forth in the characterizing clause of Claim 1.

Further developments of the invention are disclosed in the depending claims.

BRIEF DESCRIPTION OF THE DRAWING

Figure 1 is a top-plan view of a dolly of this invention.

Figure 2 is a side-elevational view of the dolly shown in Figure 1.

Figures 3 and 4 are side-elevational views of the dolly shown in Figure 1, illustrating two different working positions.

DESCRIPTION OF A PREFERRED EMBODIMENT

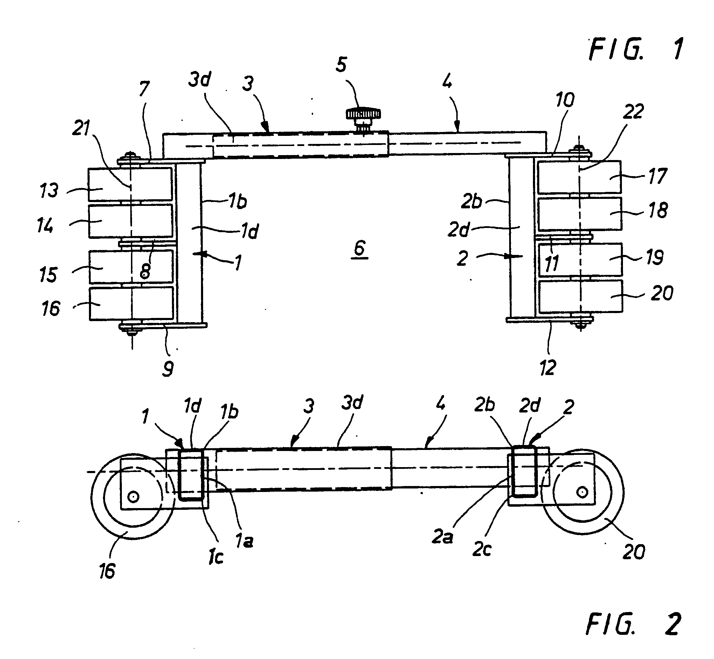

Figure 1 is a top-plan view of a dolly in accordance with the invention. The dolly includes a chassis structure which, in the embodiment shown, has the form of a frame open at one side, the frame consisting of two parallelly spaced square tubes 1 and 2 and two square tubes 3 and 4 which slidingly engage each other in a telescopic way. Each one of the tubes 3 and 4 is, adjacent one end thereof, rigidly secured, as by welding, to one end of a respective one of the tubes 1 and 2, so that the tubes 1-4 form a horisontally lying, right-angled U-shaped frame, where the tubes 1 and 2 constitute cross members, which extend laterally from the main frame member 3 and 4, respectively. The mutually displaceable tubes 3 and 4 may be slid in a longitudinal direction with respect to each other, and, when the desired relative position of the tubes 3 and 4 is attained, they may be locked in this position by tightening a locking nut 5. The nut 5 may be of any known type, and is, therefore, not described in further detail here.

The inboard region between the tubes 1-4 defines a vertical hole 6 through the dolly, which hole has such adjustable size as to permit the dolly to partially embrace the object to be supported. When an object is to be supported by the dolly, the object is partially lowered into the hole 6 until it abuts predetermined abutments formed in the hole 6. The hole 6 has a width corresponding to the length of the tubes 1 and 2, and has a length corresponding to the adjustable spacing between the tubes 1 and 2. The hole 6 may, if desired, be substantially broader than the object to be supported, for instance if the dolly shall support two or more objects, for instance both the left and the right rear wheel of a vehicle.

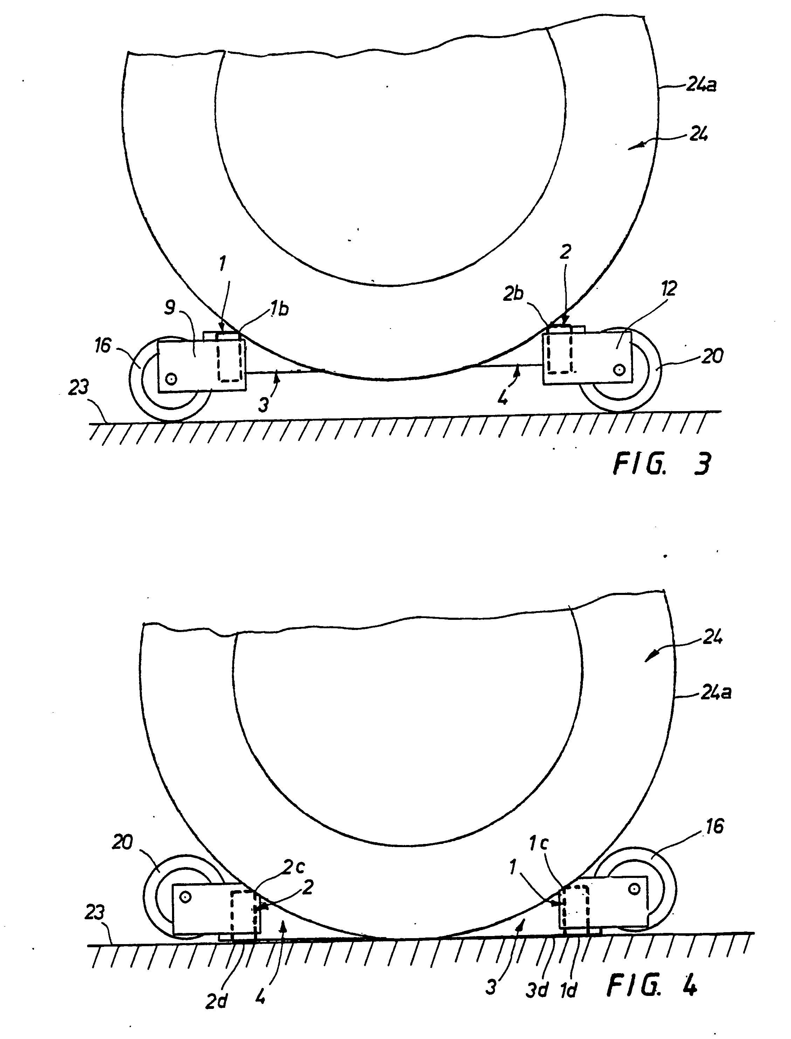

The square tubes 1 and 2 are provided with three plateshaped brackets 7-9 and 10-12, respectively, for carrying a number of roller means, which permit the chassis structure 1-4 to be rolled on a ground or floor 23, see Figure 3. The roller means are, in the embodiment shown, in the form of four wheel-like cylindric rollers 13-16 and 17-20, respectively, rotatably mounted on a schematically shown shaft 21 and 22, respectively, which shaft is supported by the brackets 7-9 and 10-12, respectively.

The dolly may, therefore, in a first working position ("rolling position") roll on the ground or floor 23 while supporting an object, for instance a wheel which is secured to a vehicle (not shown).

The top side of the dolly, i.e. the top side of the square tubes 1-4, lies in a common plane which is located somewhat above the rollers 13-20, so that these will not extend down to the ground or floor 23 if the dolly is turned upside down to a second working position, see Figure 4, wherein the dolly serves as a chock.

The square tubes 1 and 2 have opposite sides 1a and 2a which face each other, see Figure 2, and which have an upper longitudinal edge 1b and 2b, respectively, and a lower longitudinal edge 1c and 2c, respectively. The upper edges 1b and 2b form together a first abutment for an object, for instance said wheel 24, which is to be supported by the dolly in its rolling position, see Figure 3.

The lower edges 1c and 2c form together a second abutment for the wheel 24 when it is supported by the dolly when this is in its upside down position, see Figure 4.

Apparently, the distance between the tubes 1 and 2 may be selected such that the object will not reach down to the ground or floor 23 in the rolling position of the dolly (Figure 3), whereas the object is allowed to reach the ground or floor 23 in the upside down position of the dolly (Figure 4).

The telescopic arrangement of the tubes 3 and 4 means that the tube 4 has a somewhat smaller dimension than the tube 3, so that the tube 4 will not abut the ground or floor 23 in the upside down position of the dolly, see Figure 4. But the plane top sides 1d, 2d and 3d of the tubes 1, 2 and 3 lie in a common plane, so that the top sides 1d, 2d and 3d are able to form abutment surfaces for abutting against the ground or floor 23 in the upside down position of the dolly. The major part of the top surface of the dolly, i .e. the entire top side of the dolly except the free top side of the tube 4, will, therefore, form abutment surfaces for resting and abutting against the ground or floor 23.

The friction coefficient between the abutment surfaces 1d-3d and the ground or floor 23 is selected sufficiently high in order to guarantee that the dolly, in its upside down position, will not be able to slide on the ground or floor 23. If the object that is to be supported is very heavy, for instance if an end of a vehicle shall be supported via one or more of its wheels, this will normally not require any special high friction coefficient in order to guarantee that the dolly will not slide in its upside down position.

Since the chassis 1-4 in the embodiment shown has a lying U-shape which is open towards one side, the dolly is capable - at least in its upside down position, when it is to be used as a chock - of being slid laterally into place under the wheel 24 without any need of lifting the wheel 24 from the ground or floor 23, see Figure 4. Before placing the chock under the wheel it has to be opened a sufficient distance so that the tubes 1 and 2 can be placed on opposite sides of the wheel 24 and somewhat spaced therefrom. Then the tubes 3 and 4 are telescopically moved towards each other until the edges 1c and 2c of the tubes 1 and 2 come into contact with opposite sides of the tire ring 24a of the tire 24, whereafter the tubes 3 and 4 are locked in this position by tightening the locking nut 5. In this case the tire ring 24a will rest against the ground or floor 23, see Figure 4. Alternatively, it is of course possible to adjust the size of the chock opening such that the wheel 24 will be supported by the chock with the tire ring being spaced above the ground or floor 23. In that case, and also in the case where the wheel 24 is to be supported by the dolly in its rolling position, see Figure 3 (where the wheel 24 must not reach the ground or floor 23), the distance between the tubes 1 and 2 has to be adjusted to a smaller value than in the case shown in Figure 4, which of course requires that the wheel must be lifted, for instance by a lifting-jack or the like (not shown), and then lowered down into the dolly until the tire ring 24 a of the wheel 24 comes into contact with and rests against the abutment 1b-2b.

## Claims

1. A dolly for facilitating moving of heavy objects, said dolly including a substantially horizontally oriented chassis structure (1-4) for supporting said object, said chassis structure having roller means (13-20) enabling said chassis structure to be rolled on a ground or the like (23), **characterized** in that said chassis structure (1-4) has a top side with plane abutment surfaces (1d, 2d, 3d) located above said roller means (13-20) and permitting the dolly to be turned upside down and placed with said abutment surfaces against said ground (23), said chassis structure having a substantially vertically oriented through hole (6), said hole having abutments (1b, 2b; 1c, 2c) against which said object may rest when the dolly is placed with said roller means (13-20) against said ground (23, Figure 3), and, as well, when the dolly is turned upside down (Figure 4) and rests with said abutment surfaces against said ground, the dolly in its upside down position thereby being capable of serving as a chock for said object.

2. The dolly of claim 1, **characterized** in that said hole (6) is open towards one side of said chassis structure (1-4), thus permitting the dolly, in its upside down position, to be slid into place under said object (24), also if this rests on said ground (23).

3. The dolly of claim 1, **characterized** in that said hole (6) has two opposite sides (1a, 2a) which are movable relative each other, and which support said abutments (1b, 2b; 1c, 2c), a locking means (5) being arranged to lock said opposite sides (1a, 2a) at selected spaced positions.

*FIG. 1*

*FIG. 2*

FIG. 3

FIG. 4

European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-3 319 974 (ASHLEY)<br>* Column 2, line 48 - column 3, line 15; figures *<br>--- | 1 | B 66 F 7/24<br>B 60 B 30/04<br>B 60 T 3/00 |
| A | US-A-4 696 484 (CASEY)<br>* Figures; column 3, lines 42-54 *<br>--- | 1 | |
| A | DE-A-3 440 042 (BERNHOLZ)<br>* Page 7, line 13 - page 8, line 23; figures *<br>--- | 1-3 | |
| A | DE-A-3 103 453 (JUHASZ)<br>* Figures *<br>----- | 1 | |

TECHNICAL FIELDS SEARCHED (Int. Cl.5)

B 66 F
B 60 P
B 60 B
B 64 F
B 60 T
B 60 S
B 60 R

The present search report has been drawn up for all claims

| Place of search | Date of completion of the search | Examiner |
|---|---|---|
| THE HAGUE | 23-05-1990 | GUTHMULLER J.A.H. |